# EUROPEAN PATENT SPECIFICATION

(11) **EP 3 249 215 B1**
(45) Date of publication and mention of the grant of the patent: **15.05.2019**
(21) Application number: 17154651.8
(22) Date of filing: 03.02.2017
(51) Int. Cl.: F03B 17/06, F03D 3/04, F03D 3/06

(54) **TURBINE FOR CONVERTING THE KINETIC ENERGY OF THE FLOW OF A FLUID MEDIUM INTO A ROTATION OF A TURBINE ROTOR**
TURBINE ZUR UMWANDLUNG VON KINETISCHER ENERGIE DER STRÖMUNG EINES STRÖMENDEN MEDIUMS IN EINE DREHUNG EINES TURBINENROTORS
TURBINE POUR CONVERTIR L'ÉNERGIE CINÉTIQUE DE L'ÉCOULEMENT D'UN MILIEU FLUIDE EN ROTATION D'UN ROTOR DE TURBINE

(30) Priority: 27.05.2016 EE U201600022 U; 12.01.2017 EE U201700001 U
(43) Date of publication of application: 29.11.2017
(73) Proprietor: WTF Engineering OÜ, 20303 Narva (EE)
(72) Inventor: Fefelov, Oleg, 188480 Kingisepp (RU)
(74) Representative: Toome, Jürgen

(56) References cited:
- WO-A1-2011/035415
- DE-U1-202010 002 538
- RU-C2- 2 445 508
- US-A1- 2008 061 559
- US-B2- 6 981 839

## Description

### TECHNICAL FIELD

The aim of a present invention is to convert the kinetic energy of a flow of the fluid medium (i.e. air or water flow) into a mechanical energy, i.e. into a rotation of a turbine rotor in order to propel an electric generator and/or some other appliance. The turbine may be used as a wind generator, in a hydroelectric power station, or it can be installed on board of the inland waterway vessels, marine vessels or yachts. The turbine helps to produce ecologically clean energy. With a turbine installed on board of a watercraft (e.g., on a ship), the turbine drives a generator that produces electric energy, which is used among other things for charging a battery, and where said electric energy obtained is used to drive the electric motor, which propels the propeller of the watercraft.

### BACKGROUND ART

From the United States patent US4279569 (published on 21.07.1981) a wind turbine is known, comprising two modules fastened between two parallel end walls where several inlet channels for the flow of the fluid medium are formed by means of the guide vanes (dividing elements) placed between the modules. The turbine comprises several rotor blades having relatively small width in the radial direction of the rotor.

One of the shortcomings of this technical solution is that a vortex airflow is formed that slows down the airflow in front of the turbine when there are relatively short inlet channels and an outlet channel with a relatively large cross-section; this reduces the efficiency of the turbine. Another shortcoming is that there are too many rotor blades in the rotor, and their extension in the radial direction of the rotor is small; this essentially restricts the rate of the airflow directed towards the rotor and also reduces the efficiency of the turbine.

From the United States US6981839 (published on 03.01.2006) a wind turbine is known, comprising two modules fastened between two parallel end walls where two inlet channels for the flow of the fluid medium are formed by means of dividing element placed between the modules. In the rotor, the rotor blades extend in the radial direction of the rotor up to the rotational shaft of the rotor.

The shortcoming of this technical solution is that the middle wedge-shaped dividing element in the airflow entering the body of the turbine forms large vortexes in the body that reduce the efficiency of the turbine. Another shortcoming is that if the rotor blades have been selected as wide as possible, there is no gap between the rotor blades and the rotational shaft of the rotor, wherefore the loading of the rotor with the propelling mechanism (e.g., a generator) causes the stepwise reduction of the rotational speed of the rotor, and ultimately its stopping.

The known solution closest to the present invention is the turbine disclosed in the Russian Federation patent RU2445508C2 (published on 20.03.2012), which comprises two modules with wing profile placed opposite each other and fastened between the end walls of the turbine body where a recess is made in one module in the full length of the module, said recess having a semi-circular cross-section and surrounding the rotor, i.e. the rotor is located in this recess to the extent equal to half of its circumference. With the help of these two modules, both the inlet channel and the outlet channel of the turbine have been formed.

The rotor comprises two disc-shaped end plates and rotor blades fastened between said end plates, as well as a rotational shaft or half-shafts of the rotor. The rotor blades have been formed as wings with an asymmetric cross-section, the convex profile part of which faces the rotation direction of the rotor, and where the rotor blades have been positioned radially between the end plates of the rotor close to the perimeter of the end plates.

### SUMMARY OF INVENTION

The main difference of the present invention compared to the above-mentioned solution from the document RU2445508C2 is that two inlet channels have been formed in the solution according to the present invention for the flow of the fluid medium (i.e. air flow or water flow).

The turbine in accordance with the present invention can be used as both a vertical and horizontal turbine.

The structure of the turbine allows it to operate in any position, including vertical and horizontal positions, as well as inclined under any angle in relation to the vertical or horizontal and, in addition, the turbine has relatively small overall dimensions and is capable of operating with relatively low wind velocity from 2 to 5 m/s and with a water flow velocity of 3 to 5 km/h; this allows it to achieve remarkable results in the conversion of energy.

Furthermore, the solution according to the present invention has the aim of providing a turbine that generates as little noise as possible when operating.

With the present invention is provided a turbine for converting the kinetic energy of the flow of a fluid medium (i.e. air or water flow) into a rotation of a turbine rotor, where the turbine comprises three profiled modules fastened between two parallel end walls with the help of which two inlet channels are formed for directing the flow of the fluid medium to the rotor, and one outlet channel.

In one of the outermost modules, there is a concave recess and between said recess and the rotor is provided a minimum gap, where the concave recess surrounds the rotor at circumference of the rotor to the maximum extent of 180 degrees. In other words, the rotor is located in this recess by up to a half of its circumference.

The concave recess surrounds/grips the rotor at circumference of the rotor to the extent of 175 to 180 degrees (i.e., the angular size (α1) of the recess at the circumference of the rotor). In the most preferred embodiment, the concave recess surrounds the rotor at the circumference of the rotor mainly to the extent of 180 degrees.

The rotor comprises rotor blades fastened between the two disc-shaped end plates, as well as a rotational shaft or half-shafts of the rotor fastened to the end plates; where said rotor blades have been formed as wings having an asymmetric cross-section with the convex profile part facing the rotation direction of the rotor, and where the rotor blades have been positioned radially between the end plates of the rotor close to the perimeter of the disc-shaped end plates.

With the help of outermost modules, one inlet channel is formed on both sides of the middle module (one inlet channel on the side of the first outermost module, and the other inlet channel on the side of the second outermost module), and one common outlet channel is formed between the outermost modules.

The middle module is placed between the two outermost modules and together they form two inlet channels in the turbine body in order to direct the flow of the fluid medium to the rotor, where the cross-section of both inlet channels is smoothly reduced from the inlet opening of the corresponding inlet channel towards the outlet opening of the corresponding inlet channel.

One common outlet channel has been formed between the outermost modules in order to direct the flow of the fluid medium out of the turbine.

The outlet channel is formed as an extension of one of the inlet channels.

The middle module divides the turbine body into two inlet channels with a rectangular cross-section. The middle module has such a form in the direction of the flow that the cross-section of each inlet channel is smoothly reduced from the inlet opening of the body towards the outlet opening.

Preferably, the cross-section of each inlet channel is reduced between two and five times from the inlet opening of the corresponding inlet channel towards the outlet opening of the corresponding inlet channel. In the most preferable embodiment, the cross-section of the inlet channel is reduced by almost three times from the inlet opening of the corresponding inlet channel towards the outlet opening.

The reduction of the inlet channel will be selected in accordance with the character of the fluid medium (i.e. either water or air).

The geometrical shape of the reducing inlet channels in the flow direction of the fluid medium has been accomplished by means of smooth bends that accelerate the flow of the fluid medium and direct it in the direction of the rotor.

Preferably, one of the inlet channels transforms into an outlet channel. More preferably, the longer inlet channel transforms into the outlet channel that prevents significant decrease of the rate of the flow of the fluid medium. Compared to the earlier known solution (i.e. the known solution of RU2445508C2), the shape and the size of the outlet channel have been substantially changed, which enables significant reduction in slowing down of the rate of the flow of the fluid medium.

Preferably, the angular size (α4) of the outlet opening of this longer inlet channel at the circumference of the rotor is equal to or less than the angular size (α2) of the outlet opening of the other inlet channel at the circumference (α2 ≥ α4) of the rotor.

Preferably the angular distance (α3) between the outlet opening of the longer inlet channel and the outlet opening of the other inlet channel at the circumference of the rotor is from 70 to 90 degrees.

Preferably, the cross-section of the outlet channel at the side of the rotor (i.e. the inlet opening of the outlet channel) is 0.5 to 1.2 times larger than the total cross-section of the inlet channels at the side of the rotor (i.e. the total cross-section of the outlet openings).

Preferably, the angular size (α5) of the inlet opening of the outlet channel at the circumference of the rotor is 0.5 to 1.2 times larger than the total angular size of the outlet openings of the inlet channels at the rotor circumference (α5 = 0.5... 1.2 x (α2 + α4)).

In the present solution, the rotor blades preferably have a concave-convex profile. The concave-convex profile of the rotor blades compared to the smooth-convex profile allows for the flow of the fluid medium along the chord of the profile to form a higher lifting force on the rotor blade.

Preferably, there are a minimum of six rotor blades in the rotor. Most preferably, there are a maximum of twelve rotor blades in the rotor.

Preferably, the length of each inlet channel and the length of the outlet channel is in a range that is equal to a 0.5 to 3 times (including) of the diameter of the rotor. This length is selected according on the character of the flowing fluid medium (i.e. water or air) and the velocity of the flowing fluid medium. The lengths of the channels is measured in the centre of the cross-sections at the inlet and outlet openings.

Understandably, rotor blades with any other profile can also be used in the present solution.

Preferably, the outer surface of the outermost modules also has a smooth profile (i.e. with smooth bends) that starts from the edges of the corresponding inlet channels and ends at the edge of the outlet channel.

According to the invention, the flow of the fluid medium exiting from the inlet channel transforming into an outlet channel is mainly directed towards the concave side of the concave-convex rotor blades in such a way that part of the said flow is directed past the rotor blades and directed directly into the outlet channel. This flow moving directly into the outlet channel generates in the outlet channel an underpression that sucks with it the flow exiting from the other inlet channel that has lost its kinetic energy on the rotor blades.

Furthermore, the gap between the rotor perimeter and the transition point, where the inlet channel transforms into the outlet channel, is larger than the above-mentioned gap between the rotor perimeter and the other parts of the modules of the turbine surrounding the rotor (i.e. cap between a rotor and a concave recess in the outermost module and cap between the rotor and the part of the middle module between the outlet openings of the two inlet channels).

In addition, the transition point where the inlet channel transforms into the outlet channel - the transition - may be formed with a smooth radius, i.e. with a smooth curve in the profile and with a larger gap between the rotor perimeter (diameter) and the transition compared to the above-mentioned minimum gap between the rotor and the modules.

Compared to the turbine with single inlet channel, the present invention helps achieve twice the output with the same dimensions of the turbine rotor, and it increases the velocity of the fluid medium directed towards the rotor by almost three times allowing the rotor to be used for driving a generator that has a higher rotational speed and is therefore cheaper; furthermore, the investments in the construction of such a turbine will not increase essentially.

The technical result achieved with the help of the present invention is characterised in that the change in the structure of the turbine body has increased the velocity of the flowing fluid medium in the turbine thanks to the reduction of the cross-section of inlet channels in front of the rotor, which enables the rotor to be driven with a higher rotational speed compared to the velocity of the flowing fluid medium located outside of the turbine body where there is up to three times difference between the velocity of the flow of the fluid medium within the turbine and outside of the turbine body.

Compared to the solution with single inlet channel, the flow of the fluid medium is directed to the rotor blades from two positions in this solution with two inlet channels according to the present invention (i.e., from two inlet channels); therefore, the flow of the fluid medium affects a larger number of rotor blades and also from different angles to the rotor blades, which increases the efficiency of the turbine.

The turbine in accordance with the present invention is thus characterized in that:
1. The turbine body comprises three modules that have been fastened between two parallel end walls, where there is a recess in one of the outermost modules (e.g., in the first module) surrounding the rotor with a minimum gap between the rotor and the recess of the module. By means of the middle module, the flow of the fluid medium entering into the body is divided into two flows, i.e., with the help of the middle module, two inlet channels have been formed. The first inlet channel is formed between the first module and the middle module. By means of the third module, the second inlet channel is formed between the middle module and the third module, and an outlet channel is formed between the first module and the third module.
2. The middle module has such a shape that the cross-section of inlet channels from the inlet opening into the body of the turbine in the direction towards the rotor is smoothly reduced, and the difference of the cross-sections of the inlet channels or the reduction of the cross-section of the corresponding inlet channel is by up to three times from the inlet opening of the inlet channel towards its outlet opening before the rotor.
3. The geometrical shape of the inlet channels in the flow direction of the fluid medium comprises smooth bends by means of which the flow of the fluid medium is accelerated and directed to the rotor in the direction of its rotation. One, longer inlet channel transforms into the outlet channel.
4. To increase the lifting force, the rotor blades have a concave-convex profile.

### BRIEF DESCRIPTION OF DRAWINGS

The present invention is now described in greater detail with references to the accompanying drawings, in which:
Figure 1 represents the cross-section of the turbine depicted perpendicularly to the axis of rotation of the rotor along the section line A-A shown in Figure 2;
Figure 2 represents a turbine shown in the top view;
Figure 3 represents the cross-section of the turbine depicted perpendicularly to the axis of rotation of the rotor along the section line A-A shown in Figure 2 without the rotor;
Figure 4 represents the rotor depicted in axonometric projection along the section line A-A shown in Figure 2; and
Figure 5 represents the transition point where the longer inlet channel transforms into the outlet channel shown in the enlarged spot view.

### DESCRIPTION OF EMBODIMENT(S)

The following reference numbers have been used in the figures: 1 - flow of the fluid medium; 2 - rotor of the turbine; 3 - rotor blade; 4 - rotational shaft of the rotor; 5 and 6 - outermost modules of the body; 7 - middle module; 8 - end walls; 9 and 10 - inlet channels, 11 - outlet channel.

The turbine comprises three modules 5, 6 and 7 that have been fastened between the parallel end walls 8. In the module 5, there is a semicircle-shaped recess by means of which the module surrounds the rotor 2 of the turbine with a minimum gap between the rotor and the wall of the recess.

The semicircle-shaped recess of the module 5 surrounds the rotor at the perimeter of the rotor to the extent of up to 180 degrees or maximum to the extent of half circumference of the rotor (α1∼180 degrees). The middle module 7 has a profile by means of which the cross-sections of the inlet channels 9 and 10 is reduced from their corresponding inlet opening in the direction towards to the corresponding outlet opening before the rotor 2. Between the first outermost module 5 and the middle module 7, the first inlet channel 9 has been formed that has a transition point at the other side of the rotor where said inlet channel transforms into the outlet channel 11, which is formed between the first outermost module 5 and the second outermost module 6. The second inlet channel 10 has been formed between a second outermost module 6 and a middle module 7.

In the embodiment shown in the figures, the (angular) distance α3 of the outlet openings of the inlet channels 9 and 10 at the circumference of the rotor 2 is approximately 75 degrees. The section of the middle module 7 surrounding the rotor 2 and corresponding to the angle α3 is denoted with the reference number 13.

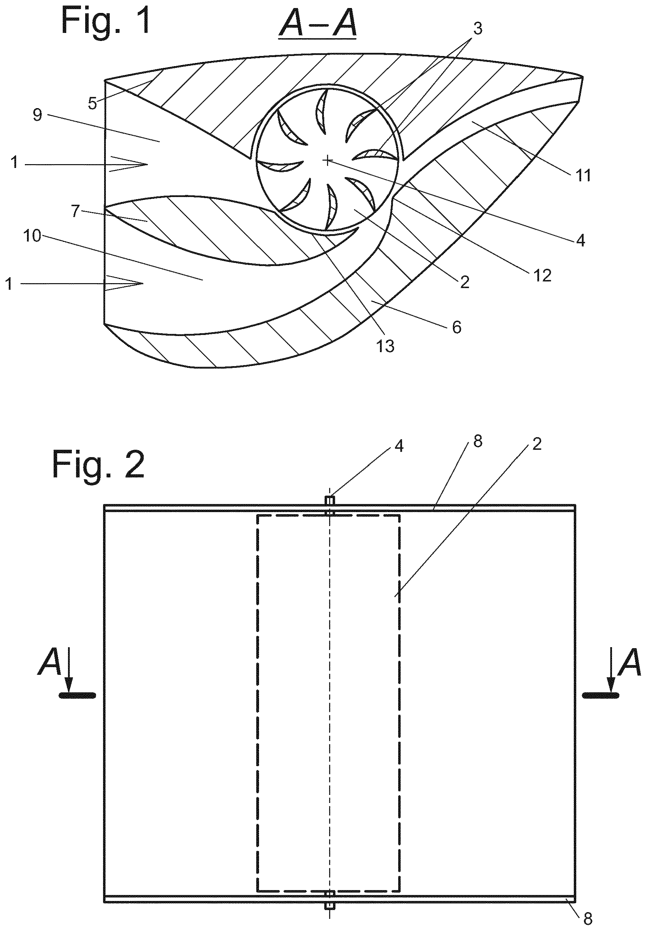

As seen from Figure 1, said longer inlet channel 10 transforms into the outlet channel 11.

Preferably, the outer surface of the outermost modules 5 and 6 also has a smooth profile (i.e. smooth bends) starting from the edges of corresponding inlet channels and ending at the edge of the outlet channel.

The rotor 2 comprises two disc-shaped end plates between which rotor blades 3 have been fastened. In the figures the rotational shaft of the rotor 2 is indicated by the reference number 4. Said rotational shaft 4 rotates on the bearings (not shown) located in the end walls 8 of the turbine. Via the rotational shaft, the rotation is transferred, for example, to the electric generator.

The blades 3 of the rotor 2 are located close to the perimeter of the rotor. The number of rotor blades 3 as well as their size and profile are selected according to the purpose of use of the turbine. Flow 1 of the fluid medium enters inlet channels 9 and 10, where, thanks to the reduction of the cross-section of the inlet channels 9 and 10, this flow is accelerated and directed from inlet channels 9 and 10 to the rotor blades 3 of rotor 2.

Preferably, the rotor blades 3 of the rotor 2 have an asymmetric profile. In the embodiment shown in Figure 1, rotor blades 3 have a concave-convex profile. The convexity of rotor blades 3 is faced in the rotation direction of rotor 2.

The flow 1 of the fluid medium entering through two inlet channels 9 and 10 is directed to the rotor blades 3 of the rotor 2 from the different positions and at different angles.

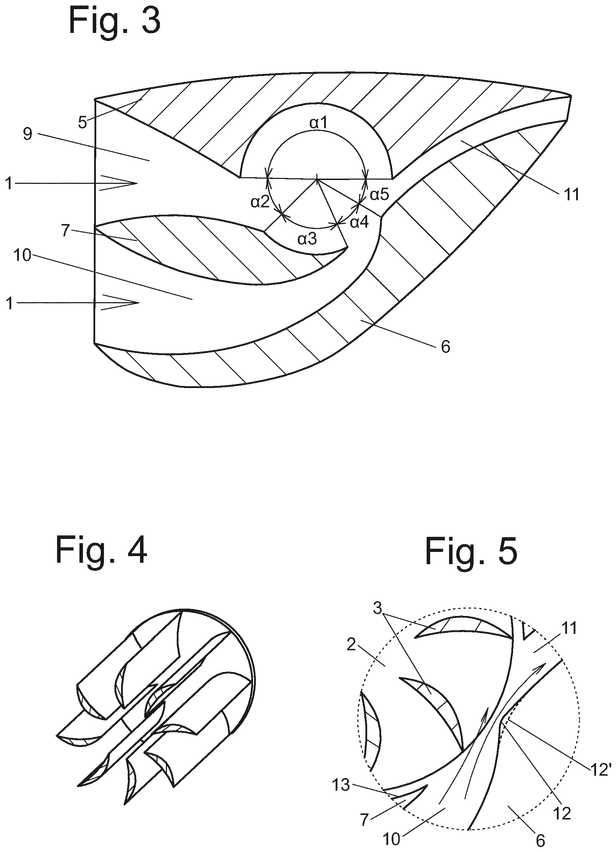

In Figure 5, the place of transition 12, 12' has been shown in the enlarged detailed view where the inlet channel 10 transforms into the outlet channel 11. An alternative embodiment 12' of the transition has been shown in said figure with dotted line. In the alternative embodiment, the transition 12' is smooth, and the gap between the edge of rotor blades 3 and transition 12' is larger. When this gap is larger, more of the flow can be directed from the inlet channel 10 directly into the outlet channel 11 and thus in the outlet channel 11 a larger underpressure can be generated to suck along the rest of the flow.

In Figure 5, the flow of the fluid medium exiting from the inlet channel 10 has been shown with arrows - part of the fluid flows directly into the outlet channel 11 and sucks with it the flow originating from the inlet channel 9 that has lost its kinetic energy on the rotor blades. The rest of the flow originating from inlet channel 10, while exiting from said outlet channel, acts on the concave side of the rotor blades with the concave-convex profile.

It is obvious for a person skilled in the corresponding field that the present invention is not limited to the exemplary embodiments described above and depicted on the attached drawings, but in the scope of the accompanying claims many other embodiments are possible.

## Claims

1. A turbine for converting the kinetic energy of the flow of a fluid medium (1) into the rotation of a turbine rotor comprising two parallel end walls (8), outermost profile modules (5, 6) fastened between the end walls (8), and a rotor (2) located between these modules (5, 6), where a rotational shaft (4) or half-shafts of the rotor are located perpendicularly to the end walls (8), and fastened rotatably to the end walls (8), where between the outermost profiled modules (5, 6) for the flow (1) of the fluid medium, at least one inlet channel has been formed before the rotor (2) and after said rotor (2) one outlet channel (11) has been formed, where in one outermost module (5) there is a concave recess surrounding the rotor (2) to the extent of 175 to 180 degrees (α1) at the circumference of the rotor (2) so that there is a minimum gap between the concave recess and the rotor (2), the rotor (2) comprising two disc-shaped end plates between which rotor blades (3) have been fastened, and where to the end plates the rotational shaft (4) or half-shafts of the rotor (2) have been fastened, the rotor blades (3) are implemented as wings with asymmetric cross-section, the convex profiled part of which is faced in the direction of rotation of the rotor (2), and the rotor blades (3) have been placed radially between the end plates of the rotor (2) close to the perimeter of the end plates, **characterised in that** between the end walls (8) and between the outermost modules (5, 6) a third, middle module (7) has been fastened in the same direction as the outermost modules (5, 6) before the rotor (2) by means of which two inlet channels (9, 10) have been formed for the flow (1) of the fluid medium between the outermost modules (5, 6) and the middle module (7) so that the cross-section of both inlet channels (9, 10) is smoothly reduced from the inlet openings of the inlet channels (9, 10) towards the outlet openings of said channels, and the outlet channel (11) is formed as an extension of one inlet channel (10), wherein the flow of the fluid medium exiting from the inlet channel (10) transforming into the outlet channel (11) is directed onto the concave side of the concave-convex rotor blades (3) in such a way that part of said flow is directed past the rotor blades (3) directly into the outlet channel (11) and in a transition point (12, 12'), where said inlet channel (10) transforms into the outlet channel (11), said gap between the perimeter of the rotor and the transition point (12, 12') is larger than the gap between the perimeter of the rotor and other parts of the turbine modules (5, 7) surrounding the rotor.

2. The turbine according to any preceding claim, **characterised in that** the cross-section of the outlet channel (11) at the rotor (2) side is equal to 0.5 to 1.2 times of the total cross-section of inlet channels (9, 10) at the rotor (2) side.

3. The turbine according to any preceding claim, **characterised in that** the blades (3) of the rotor (2) have a concave-convex profile.

4. The turbine according to any preceding claim, **characterised in that** the cross-section of each inlet channel (9, 10) is reduced from the inlet opening of the channel towards the outlet opening of the channel from two to five times.

5. The turbine according to any preceding claim, **characterised in that** the length of each inlet channel (9, 10) and outlet channel (11) is 0.5 to 3 times of the diameter of the rotor (2).

6. The turbine according to any preceding claim, **characterised in that** the rotor (2) comprises minimum of six rotor blades (3).

7. The turbine according to any of claims 1 to 5, **characterised in that** the rotor (2) comprises maximum of twelve rotor blades (3).

8. The turbine according to any preceding claim, **characterised in that** the angular size (α5) of the inlet opening of the outlet channel (11) at the circumference of the rotor (2) is equal to 0.5 to 1.2 times of the total of the angular sizes (α2, α4) of the outlet openings of the inlet channels (9, 10) at the circumference of the rotor (2).

9. The turbine according to any preceding claim, **characterised in that** the angular distance (α3) between the outlet openings of the inlet channels (9, 10) at the circumference of the rotor (2) is preferably from 70 to 90 degrees.

## Patentansprüche

1. Turbine zur Umwandlung von kinetischer Energie der Strömung eines strömenden Mediums (1) in eine Drehung eines Turbinenrotors (2), umfassend zwei parallele Endwände (8), äußerste Profilmodule (5, 6) zwischen den parallelen Endwänden (8) befestigt und einen Rotor (2), der sich zwischen diesen Modulen (5, 6) befindet, wo sich eine Welle (4) oder Halbwellen des Rotors senkrecht zu den Endwänden (8) ist und sich zu den Endwänden (8) drehbar befestigt ist, wo zwischen den äußersten profilierten Modulen (5, 6), für den Fluss (1) des strömenden Mediums, mindestens ein Einlasskanal vor dem Rotor (2) geformt wurde und nach dem genannten Rotor (2) ein Auslasskanal (11) geformt wurde, wo in einem äußerstem Modul (5) eine konkave Aussparung ist, die den Rotor (2) bis zu 175 bis 180 Grad (a1) im Umfang des Rotors (2) so umläuft, dass dort eine Minimumlücke zwischen der konkaven Aussparung und dem Rotor (2) ist, der Rotor (2) umfasst zwei scheibenförmige Endplatten zwischen deren Rotorblätter (3) befestigt wurden und wo zu den Endplatten der Welle (4) oder die Halbwellen des Rotors (2) befestigt wurden und die Rotorblätter (3) als Flügel implementiert mit einer asymmetrischen Querschnitt angebracht wurden, das konvex profilierte Teil welches sich in der Richtung der Rotation des Rotors (2) befindet, und die Rotorblätter (3) wurden radial zwischen den Endplatten des Rotors (2) nah am Perimeter der Endplatten montiert, **dadurch gekennzeichnet, dass** zwischen den Endwänden (8) und zwischen den äußersten Modulen (5, 6) ein drittes, Mittelmodul (7) in derselben Richtung des äußersten Moduls (5, 6) vor dem Rotor (2) so montiert wurde, dass zwei Eintrittskanäle (9, 10) für den Fluss (1) des strömenden Mediums zwischen den äußersten Modulen (5, 6) und dem mittleren Modul (7) so geformt wurde, dass der Querschnitt beider Einlasskanäle (9, 10) von den Einlassöffnungen der Einlasskanäle (9, 10) in Richtung der Auslassöffnungen der genannten Kanäle stufenlos verringert werden kann und der Auslasskanal (11) als eine Erweiterung eines Einlasskanals (10) geformt ist, wobei der Fluss des strömenden Mediums vom Einlasskanal (10), welcher in den Auslasskanal (11) übergeht, austritt und auf die konkave Seite der konkav-konvexen Rotorblätter (3) in solch einer Weise geleitet wird, dass das Teil des genannten Flusses hinter die Rotorblätter (3) direkt in den Auslasskanal (11) geleitet wird und einen Übergangspunkt (12, 12'), wo der genannte Einlasskanal (10) in den Auslasskanal (11) übergeht, die genannte Lücke zwischen dem Umfang des Rotors und dem Überganspunkt (12, 12') ist größer, als die Lücke zwischen dem Umfang des Rotors und anderen Teilen des Turbinenmoduls (5, 7), die den Rotor umgeben.

2. Turbine gemäß einem der vorhergehenden Ansprüche, **dadurch gekennzeichnet, dass** der Querschnitt vom Auslasskanal (11) an der Rotorseite (2) ist gleich wie 0,5 zu 1,2 Mal des ganzen Querschnittes der Einlasskanäle (9, 10) an der Rotorseite (2).

3. Turbine gemäß einem der vorhergehenden Ansprüche, **dadurch gekennzeichnet, dass** die Blätter (3) des Rotors (2) ein konkav-konvexes Profil haben.

4. Turbine gemäß einem der vorhergehenden Ansprüche, **dadurch gekennzeichnet, dass** der Querschnitt jedes Einlasskanals (9, 10) von der Einlassöffnung des Kanals in Richtung Auslassöffnung des Kanals von zwei- bis fünf Mal verringert.

5. Turbine gemäß einem der vorhergehenden Ansprüche, **dadurch gekennzeichnet, dass** die Länge jedes Einlasskanals (9, 10) und Auslasskanals (11) von 0,5 bis 3 Mal des Diameters des Rotors (2) ist.

6. Turbine gemäß einem der vorhergehenden Ansprüche, **dadurch gekennzeichnet, dass** der Rotor (2) mindestens sechs Rotorblätter (3) umfasst.

7. Turbine gemäß einem der vorhergehenden Ansprüche 1 bis 5, **dadurch gekennzeichnet, dass** der Rotor (2) maximal zwölf Rotorblätter (3) umfasst.

8. Turbine gemäß einem der vorhergehenden Ansprüche, **dadurch gekennzeichnet, dass** die Winkelgröße (a5) der Einlassöffnung des Auslasskanals (11) am Umfang des Rotors (2) 0,5 bis 1,2 Mal der gesamten Winkelgrößen (α2, α4) der Auslassöffnungen der Einlasskanäle (9, 10) am Umfang des Rotors (2) entspricht.

9. Turbine gemäß einem der vorhergehenden Ansprüche, **dadurch gekennzeichnet, dass** die Winkeldistanz (a3) zwischen den Auslassöffnungen der Einlasskanäle (9, 10) am Umfang des Rotors (2) vorzugsweise zwischen 70 und 90 Grad beträgt.

## Revendications

1. Turbine pour convertir l'énergie cinétique de l'écoulement (1) d'un milieu fluide en rotation d'un rotor (2) de turbine comprenant deux parois d'extrémité parallèles (8), modules de profils les plus à l'extérieur (5, 6) fixés entre les parois d'extrémité (8), et un rotor (2) situé entre ces modules (5, 6), où un arbre tournant (4) ou des demi-arbres du rotor étant situés perpendiculairement aux parois d'extrémité (8), et fixé de manière rotative aux parois d'extrémité (8), où entre les modules de profil les plus à l'extérieur (5, 6) pour l'écoulement (1) d'un milieu fluide, au moins un canal d'entrée a été formé avant le rotor (2) et après ledit rotor (2) un canal de sortie (11) a été formé, dans lequel dans un module (5) le plus à l'extérieur se présente un évidement concave entourant le rotor (2) sur une distance de 175 à 180 degrés (a1) à la circonférence du rotor (2) afin qu'il y ait un espace minimum entre l'évidement concave et le rotor (2), le rotor (2) comprenant deux plaques d'extrémité en forme de disque entre lesquelles des pales de rotor (3) ont été attachés et où sur les plaques d'extrémité, les arbres tournants (4) ou les demi-arbres du rotor (2) ont été fixés, les pales du rotor (3) sont réalisées sous forme d'ailes à section transversale asymétrique, dont la partie profilée convexe fait face dans le sens de rotation du rotor (2), et les pales du rotor (3) ont été placées radialement entre les plaques d'extrémité du rotor (2) à proximité du périmètre des plaques d'extrémité, **caractérisé en ce que** entre des parois d'extrémité (8) et entre les modules les plus à l'extérieur (5, 6), un troisième module central (7) a été fixé dans le même sens que les modules les plus à l'extérieur (5, 6) avant le rotor (2) au moyen duquel deux canaux d'entrée (9, 10) ont été formés pour l'écoulement (1) d'un milieu fluide entre les modules les plus à l'extérieur (5, 6) et le module central (7), de sorte que la section transversale des deux canaux d'entrée (9, 10) est réduite progressivement des ouvertures d'entrée des canaux d'entrée (9, 10) vers les ouvertures de sortie desdits canaux, et le canal de sortie (11) est formé comme une extension d'un canal d'entrée (10), où l'écoulement d'un milieu fluide sortant du canal d'entrée (10) se transformant en canal de sortie (11) est dirigé sur le côté concave des pales du rotor concaves-convexes (3) de telle sorte qu'une partie dudit écoulement passe au-delà des pales du rotor (3) directement dans le canal de sortie (11) et dans un point de transition (12, 12 '), où ledit canal d'entrée (10) se transforme en canal de sortie (11), ledit espace entre le périmètre du rotor et le point de transition (12, 12 ') est supérieur à l'espace entre le périmètre du rotor et les autres parties des modules de turbine (5, 7) entourant le rotor.

2. Turbine selon l'une quelconque des revendications précédentes, **caractérisée en ce que** la section transversale du canal de sortie (11) côté rotor (2) est égale à 0,5 à 1,2 fois la section transversale totale des canaux d'entrée (9, 10) côté rotor (2).

3. Turbine selon l'une quelconque des revendications précédentes, **caractérisée en ce que** les pales (3) du rotor (2) ont un profil concave-convexe.

4. Turbine selon l'une quelconque des revendications précédentes, **caractérisée en ce que** la section transversale de chaque canal d'entrée (9, 10) est réduite de l'ouverture d'entrée du canal vers l'ouverture de sortie du canal de deux à cinq fois.

5. Turbine selon l'une quelconque des revendications précédentes, **caractérisée en ce que** la longueur de chaque canal d'entrée (9, 10) et canal de sortie (11) est dans une gamme de 0,5 à 3 fois le diamètre du rotor (2).

6. Turbine selon l'une quelconque des revendications précédentes, **caractérisée en ce que** le rotor (2) comprend au moins six pales de rotor (3).

7. Turbine selon l'une des revendications 1 à 5, **caractérisée en ce que** le rotor (2) comprend au maximum douze pales de rotor (3).

8. Turbine selon l'une quelconque des revendications précédentes, **caractérisée en ce que** la dimension angulaire (a5) de l'ouverture d'entrée du canal de sortie (11) à la circonférence du rotor (2) est égale à 0,5 à 1,2 fois le total des dimensions angulaires (α2, α4) des ouvertures de sortie des canaux d'entrée (9, 10) à la circonférence du rotor (2).

9. Turbine selon l'une quelconque des revendications précédentes, **caractérisée en ce que** la distance angulaire (a3) entre les ouvertures de sortie des canaux d'entrée (9, 10) à la circonférence du rotor (2) est de préférence de 70 à 90 degrés.
